# EUROPEAN PATENT APPLICATION

(11) **EP 2 755 034 A2**
(43) Date of publication of application: **16.07.2014**
(21) Application number: 14151165.9
(22) Date of filing: 14.01.2014
(51) Int. Cl.: G01N 35/00, G01N 35/04

(54) **Laboratory module for storing and feeding to further processing of samples**

(30) Priority: 14.01.2013 GB 201300606
(71) Applicant: Stratec Biomedical AG, 75217 Birkenfeld-Graefenhausen (DE)
(72) Inventor: Habrich, Stephan, 75217 Birkenfeld (DE); Trump, Martin, 75217 Birkenfeld (DE)
(74) Representative: Tegethoff, Sebastian

(57) **Abstract**

A laboratory module for storing and feeding to further processing of a plurality of samples comprises at least one sample rack comprising the plurality of samples, a plurality of bays comprising a plurality of guiding rails, a transport chamber for transporting the plurality of samples to a storage location and for delivering the plurality of samples at predetermined times to a processing system. The transport chamber is adapted to accommodate the at least one sample rack, and to align with any one of the plurality of guiding rails for placing thereon or for removing therefrom the at least one sample rack. A method for storing and feeding to further processing of a plurality of samples comprises the steps of loading the plurality of samples into a laboratory module, of storing the plurality of samples, and of delivering predetermined ones of the plurality of samples at predetermined times to a processing system.

## Description

### Field of the invention

The invention relates to a laboratory module and to a method for storing and feeding to further processing of at least one sample.

### Background of the invention

The preparation and analysis of samples is being increasingly automated. High-throughput technologies demand for automated preparation, storage, manipulation and read-out of a large number of samples in parallel.

On the one hand, high-throughput analyses can provide for improved data statistics by measuring a single condition many times. On the other hand, high-throughput analyses allow examining a large number of conditions. This can be useful when a number of conditions in two or more parameters are analyzed, which leads to a combinatorial explosion of the parameter space. For example, a genome with one thousand genes will result in one million double knock-outs or one billion triple knock-outs. In addition, the discovery of small molecule binding partners of proteins can require a very large number of samples to be analyzed.

Usually, samples are placed in processing systems immediately before being processed by a liquid handling systems or a pipettor. Subsequently, when the treatment is finished, the samples are removed. The samples can for example be delivered to the processing system manually or by a conveyor system. In either case of delivery of the samples, a technician has to pay constant attention to the correct order of the samples. This requires constant surveillance by a technician or user. Any manual step in the process of loading the samples makes the entire analysis process slower and also more error prone.

In high-throughput analysis systems, samples are processed quickly and must be replaced after a short time. The frequency of human interaction is therefore too high for efficient operation of fully automated systems.

### Summary of the invention

A laboratory module for storing and delivering to further processing of a plurality of samples is disclosed. The laboratory module comprises at least one sample rack comprising the plurality of samples, a plurality of bays comprising a plurality of guiding rails, a transport chamber for transporting the plurality of samples to a storage location and for delivering the plurality of samples at predetermined times to a processing system, wherein the transport chamber is adapted to accommodate the at least one sample rack and to align with any one of the plurality of guiding rails for placing thereon or for removing therefrom the at least one sample rack.

The laboratory module may comprise a transport module for moving the transport chamber.

In one aspect of the invention, at least a first one of the plurality of bays is accessible by the processing system.

In another aspect of the invention, at least a second one of the plurality of bays is accessible from the surroundings for placing thereon or removing therefrom the at least one sample rack. In this aspect, the at least second one of the plurality of bays may comprise a lockable flap.

In a further aspect of the invention, the transport chamber may comprise a transport interface for moving the at least one sample rack into or out of the transport chamber.

In a further aspect of the invention, the laboratory module may comprise a storage device for storing data pertaining to the identity of the samples and to a location within the laboratory module of the plurality of samples.

In a further aspect of the invention, the laboratory module may comprise a barcode scanner for generating and transferring to the storage device data pertaining to the identity of the plurality of samples and to the location within the laboratory module of the plurality of samples.

In a further aspect of the invention, the laboratory module may comprise a controller for controlling the moving of the plurality of samples within the laboratory module.

The invention relates to a method for storing and feeding to further processing of a plurality of samples. The method comprises the steps of loading the plurality of samples into a laboratory module, storing the plurality of samples, delivering predetermined ones of the plurality of samples at predetermined times to a processing system.

In a further aspect of the invention, the method may comprise the step of placing the samples in at least one sample rack (40) before the loading of the samples.

In a further aspect of the invention, the loading of the samples further comprises loading the samples onto a loading bay. The loading bay may comprise a lockable flap.

In a further aspect of the invention, the storing of the samples comprises moving the samples to a storage bay.

In a further aspect of the invention, the storing of the plurality of samples comprises storing information pertaining to the identity of the plurality of samples and to the location within the laboratory module of the plurality of samples.

### Brief description of the figures

Fig. 1 shows a front view of the laboratory module according to the invention.
Fig. 2 shows a rear view of the laboratory module according to the invention.
Fig. 3 shows a particular one of the sample racks according to the invention..
Fig. 4 shows a transport module according to the invention.
Fig. 5 shows a transport chamber according to the invention.

### Object of the invention

It is an object of the invention to provide a laboratory module that makes the delivery of samples to a processing system easier, faster, more efficient, and more reliable. The invention will now be described by way of example, as shown in the figures.

### Detailed description of the invention

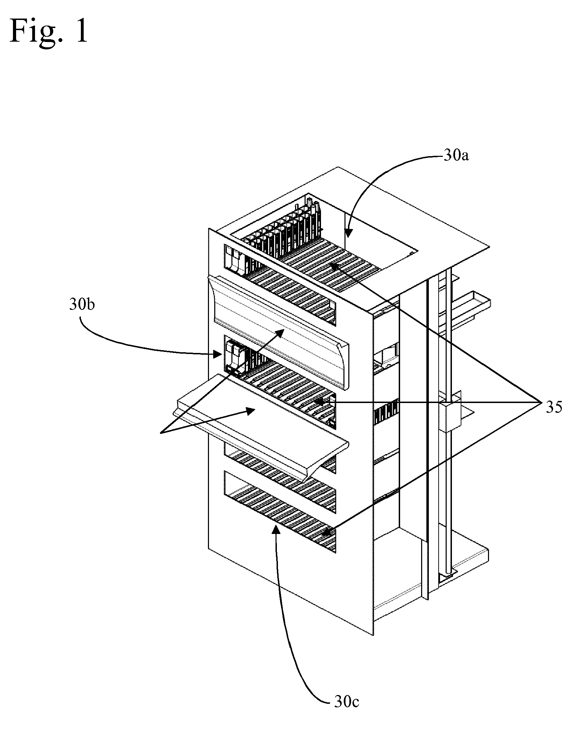

The problem is solved by the features as contained in the independent claims, with advantageous embodiments being described by the features as contained in the independent claims. Fig. 1 shows a front view of an aspect of the invention. The laboratory module (10) comprises a plurality of bays (30). The plurality of bays (30) comprises different types of bays (30a, 30b, 30c). The plurality of bays (30) is adapted to accommodate samples, which are to be processed.

The plurality of bays (30) comprises at least one processing bay (30a), which is shown at the top of the laboratory module (10) in Fig. 1. The at least one processing bay (30a) is accessible from the top by a processing system, e.g. a liquid handling system or a pipettor.

The laboratory module (10) further comprises at least one loading bay (30b). The at least one loading bay (30b) is accessible from the surroundings of the laboratory module (10). The at least one loading bay (30b) comprises a lockable flap (37). A user or other loading means can load the at least one loading bay (30b) through the lockable flaps (37).

The laboratory module (10) further comprises at least one storage bay (30c) for storing samples. The storage bay (30c) is accessible by a transport chamber (described below).

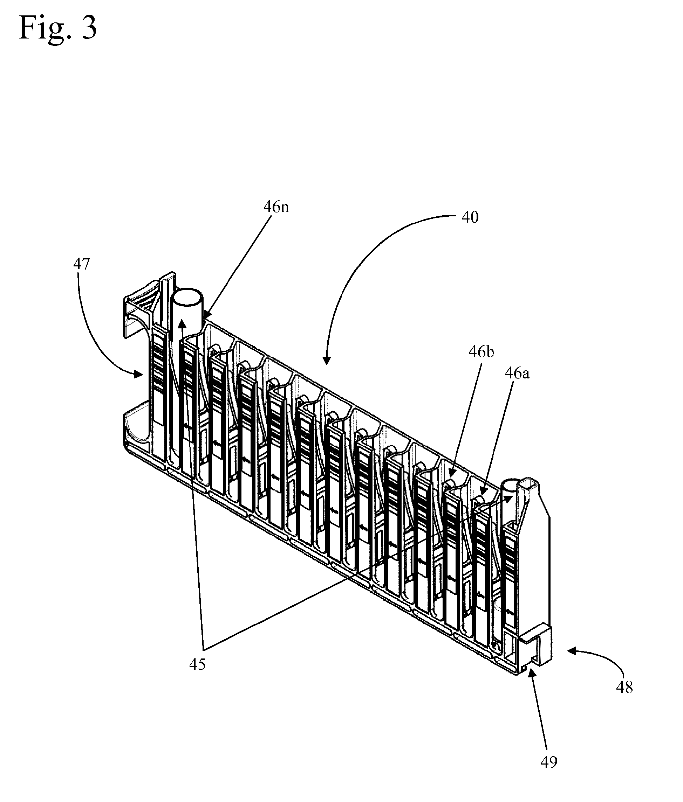

The plurality of bays (30) comprises a plurality of guiding rails (35). Any one of the plurality of guiding rails (35) is adapted to have any one of a plurality of sample racks (40) (see Fig. 3) placed thereon.

Fig. 3 shows an aspect of the plurality of sample racks (40). The sample rack (40) shown in Fig. 3 comprises a plurality of slots (46a, ..., 46n) for placing samples, and a groove (49) adapted for placing the sample rack (40) onto any one of the plurality of guiding rails (35). The samples may be comprised in a plurality of test tubes (45) placed into the plurality of slots (46a, ..., 46n).

The sample rack (40) shown in Fig. 3 comprises a handle (47) adapted for a user or other loading means to load the sample rack (40) onto the at least one loading bay (30b). The sample rack (40) shown in Fig. 3 further comprises a robotic interface (48).

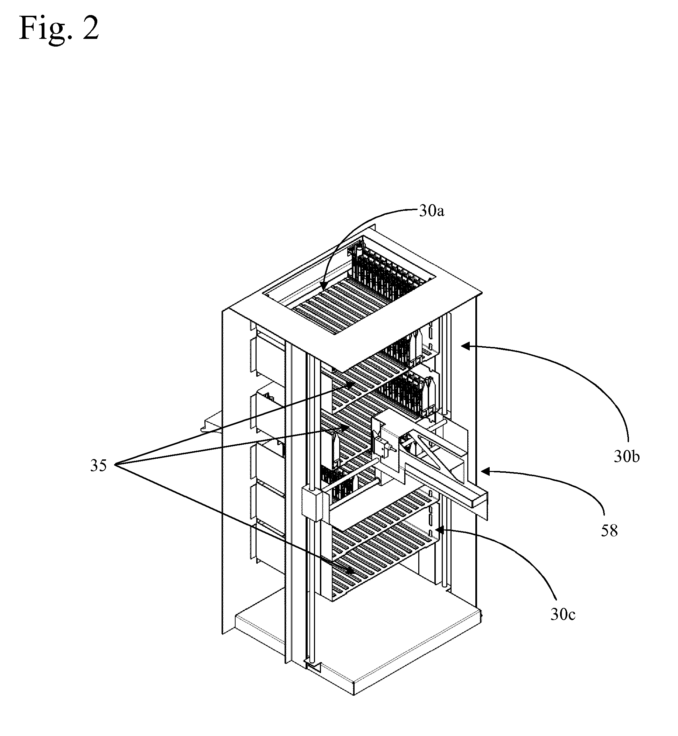

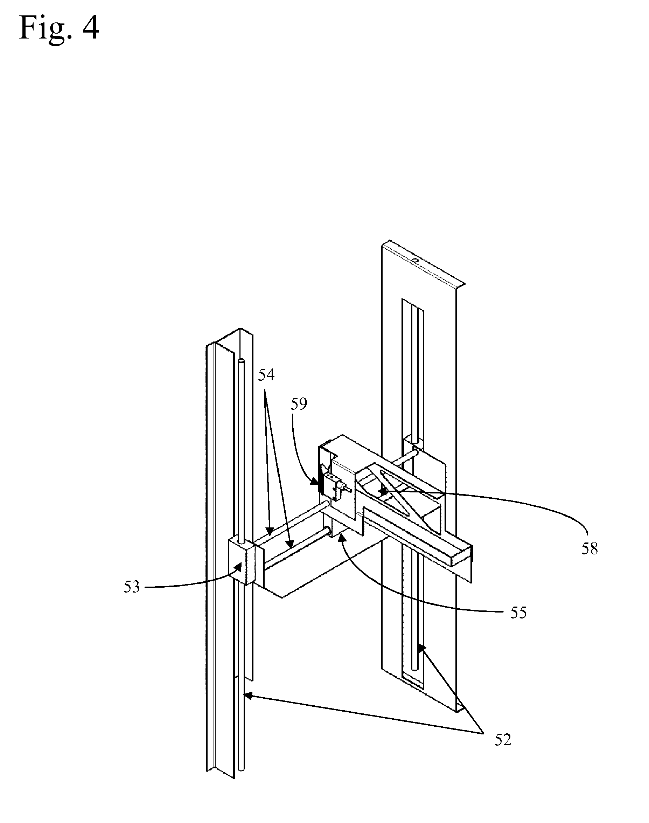

Fig. 2 shows a rear view of the same aspect of the invention. The laboratory module (10) comprises a transport module (50), as shown in Fig. 4, attached to the rear side of the laboratory module (10).

Fig. 4 shows the transport module (50). The transport module (50) comprises vertical rails (52). The vertical rails (52) are adapted to have a vertical slider (53) sliding thereon. The vertical slider (53) comprises horizontal rails (54) adapted to have a horizontal slider (55) sliding thereon. The horizontal slider comprises a transport chamber (58). With the help of the vertical slider (53) and the horizontal slider (55) the transport chamber (58) can be moved vertically and horizontally. The transport chamber (58) is adapted to align with any one of the plurality of guiding rails (35).

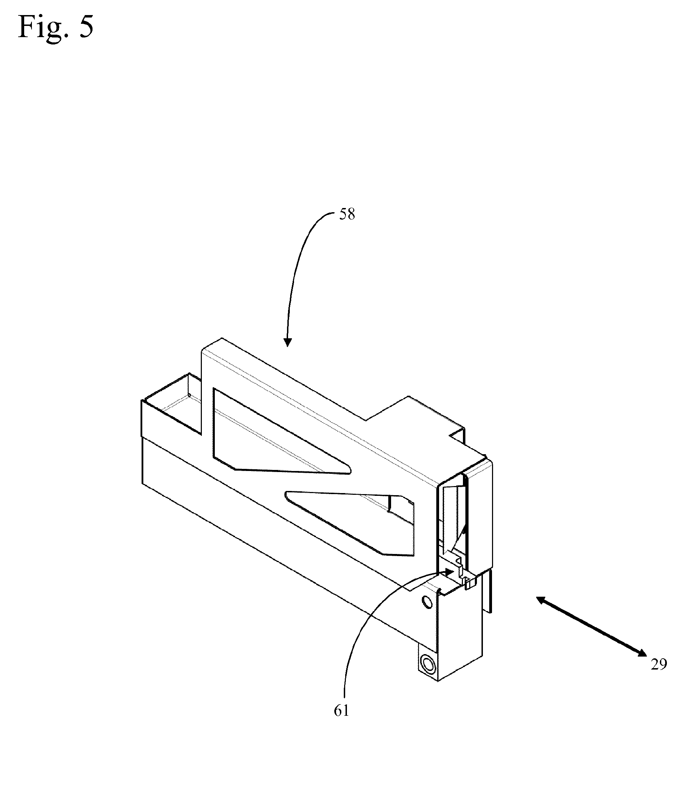

The transport module (50) also comprises a barcode scanner (59). Fig. 5 shows an enlarged view of the transport chamber (58), shown from a different angle than in Fig. 4. The transport chamber (58) is adapted to accommodate any one of the plurality of sample racks (40). The transport chamber (58) comprises a transport interface (61) for moving any one of the plurality of sample racks (40) into or out of the transport chamber (58). The transport interface (61) is adapted to communicate with the robotic interface (48) of any one of the plurality of sample racks (40).The transport interface (61) is electrically driven.

By aligning the transport chamber (58) with any one of the guiding rails (35) having a particular one of the plurality of sample racks (40) placed thereon, and by communication of the transport interface (61) with the robotic interface (48) of the particular one of the plurality of sample racks (40), the transport interface (61) can move the particular one of the plurality of sample racks (40) into or out of the transport chamber (58), along a direction as indicated by arrow (29). It is therefore an advantage of the present invention that the plurality of sample racks (40) remains at any moment accessible by the transport chamber (58).

When the particular one of the plurality of sample racks (40) is moved into or out of the transport chamber (58), the barcode scanner (59) identifies the particular one of the plurality of sample racks (40) as well as the samples placed in the slots (46a, ..., 46n) thereof. It is an advantage of the present invention that the samples are identified when accommodated in the transport chamber (58). Thereby, the laboratory module (10) knows at any moment the particular one of the plurality of guiding rails (35) the particular sample is placed on.

The laboratory module (10) comprises a storage device (not shown) for storing scanning data transmitted from the barcode scanner (59). When the particular one of the plurality of the sample racks (40) is moved from a first one of the plurality of guiding rails (35) to a second one of the plurality of guiding rails (35), the storage device stores the scanning data pertaining to the identity of the particular one of the plurality of sample racks (40) and the samples placed in the slots (46a, ..., 46n) thereof. The storage device also stores location data pertaining the identity of the second one of the plurality of guiding rails (35). Thereby, at any moment the laboratory module (10) knows the location of any one the samples. As a result, any one of the samples is accessible at any moment. It is therefore an advantage of the present invention, that a technician or other loading means need not deliver the samples in a predetermined order to the laboratory module (10).

The laboratory module (10) also comprises a controller (not shown). The controller receives scanning data and location data from the storage device. The controller controls at least one first motor (not shown) for driving the vertical slider (53), and at least one second motor (not shown) for driving the horizontal slider (55). The controller also controls the electrical driving of the transport interface (61). By driving the at least one first motor, the at least one second motor, and the transport interface (61), any one of the plurality of sample racks (40) can be efficiently and reliably transported in the transport chamber (58) within the laboratory module (10) from one location to another. It is an advantage of the present invention that the samples can be delivered to the processing system in a predetermined order with the help of the controller.

In one aspect of the invention, a several ones of the plurality of sample racks (40), which have been loaded onto the at least one loading bay (30b), are subsequently transported to the at least one storage bay (30c) by the transport chamber (58). It is an advantage of this aspect of the present invention that a user or another loading means can fill up the at least one storage bay (30b) in one single work step. Thereafter, the laboratory module (10) can operate autonomously and can process, in conjunction with further laboratory equipment like a pipettor or a liquid handling system, a predetermined series of processing steps. The processing steps may involve processing of samples placed on some of the plurality of sample racks (40). It is an advantage of this aspect of the present invention that no further human interaction is required until the series of processing steps is accomplished.

In a further aspect of the invention, the plurality of sample racks (40) comprising samples may be continuously loaded onto the at least one loading bay (30b). The controller controls the transport chamber (58) to move some of the plurality of sample racks (40), placed on the loading bay (30b) and comprising required samples, to the processing bay (30a) for processing. It is an advantage of this aspect of the present invention that high-throughput processing can be achieved.

In a further aspect of the invention, all storage bays (30c) are accessible to a user or other loading means.

In another aspect of the invention, the transport chamber (58) is adapted to move several ones of the plurality of sample racks (40) at any one moment.

## Claims

1. A laboratory module (10) for storing and providing access to a plurality of samples, the laboratory module (10) comprising:
- at least one sample rack (40) comprising the plurality of samples,
- a plurality of bays (30) comprising a plurality of guiding rails (35),
- a transport chamber (58) for transporting the plurality of samples to a storage location and for delivering predetermined ones of the plurality of samples at predetermined times to a processing system,
wherein the transport chamber (58) is adapted to accommodate the at least one sample rack (40), and to align with any one of the plurality of guiding rails (35) for placing thereon or for removing therefrom the at least one sample rack (40) and further comprising
a storage device for storing data pertaining to the identity of the samples and to a location within the laboratory module (10) of the plurality of samples and
a barcode scanner for generating and transferring to the storage device of data pertaining to the identity of the plurality of samples and to the location within the laboratory module (10) of the plurality of samples
wherein when a sample rack (40) is moved into or out of the transport chamber (58), the barcode scanner identifies the sample rack (40) as well as samples placed in slots of the sample rack (40).

2. The laboratory module (10) according to claim 1, wherein the laboratory module (10) comprises a transport module for moving the transport chamber (58).

3. The laboratory module (10) according to any one of the preceding claims, wherein at least a first one of the plurality of bays (30) is accessible by the processing system.

4. The laboratory module (10) according to any one of the preceding claims, wherein at least a second one of the plurality of bays (30) is accessible from the surroundings for placing thereon or removing therefrom the at least one sample rack (40).

5. The laboratory module (10) according to claim 4, wherein the at least second one of the plurality of bays (30) comprises a lockable flap (37).

6. The laboratory module according to any one of the preceding claims, wherein the transport chamber (58) comprises a transport interface (61) for moving the at least one sample rack (40) into or out of the transport chamber (58).

7. The laboratory module according to any one of the preceding claims, further comprising a controller for controlling the moving of the plurality of samples within the laboratory module (10).

8. A method for storing and providing access to a plurality of samples, the method comprising the steps of:
- loading the plurality of samples into a laboratory module (10) of claim 1,
- storing the plurality of samples,
- delivering predetermined ones of the plurality of samples at predetermined times to a processing system
wherein when a sample rack (40) is moved into or out of a transport chamber (58) of the laboratory module (10) of claim 1, a barcode scanner identifies the sample rack (40) as well as samples placed in slots of the sample rack (40).

9. The method according to claim 8, further comprising the step of placing the samples in at least one sample rack (40) before the loading of the samples.

10. The method according to claim 8 or 9, wherein the loading of the samples comprises loading the samples onto a loading bay (30b), the loading bay comprising a lockable flap (37).

11. The method according to claim 8 or 10, wherein the storing of the samples comprises moving the samples to a storage bay (30c).

12. The method according to any one of the claims 8 to 11, wherein the storing of the plurality of samples comprises storing information pertaining to the identity of the plurality of samples and to a location within the laboratory module (10) of the plurality of samples.
